## Europäisches Patentamt
### European Patent Office
### Office européen des brevets

(11) Veröffentlichungsnummer: **0 354 298 B1**

(12) **EUROPÄISCHE PATENTSCHRIFT**

(45) Veröffentlichungstag der Patentschrift: **22.12.93**

(21) Anmeldenummer: **89106735.7**

(22) Anmeldetag: **14.04.89**

(51) Int. Cl.⁵: **G01J 3/45**, G01N 21/45, G02B 27/28

(54) Interferometrisches Gaskomponenten-Messgerät für kleine Gasmoleküle.

(30) Priorität: **28.07.88 DE 3825683**

(43) Veröffentlichungstag der Anmeldung:
**14.02.90 Patentblatt 90/07**

(45) Bekanntmachung des Hinweises auf die Patenterteilung:
**22.12.93 Patentblatt 93/51**

(84) Benannte Vertragsstaaten:
**AT BE CH DE ES FR GB IT LI LU NL**

(56) Entgegenhaltungen:
**FR-A- 2 633 394**
**GB-A- 2 174 198**

(73) Patentinhaber: **Erwin Sick GmbH Optik-Elektronik**
**Sebastian-Kneipp-Strasse 1**
**D-79183 Waldkirch(DE)**

(72) Erfinder: **Disch, Rolf, Dipl.-Phys.**
**Hinter den Eichen 3**
**D-7801 Reute(DE)**
Erfinder: **Hartig, Wolfgang, Dipl.-Phys. Dr. rer. nat.**
**Am Bleichacker 3**
**D-7808 Waldkirch(DE)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Postfach 22 16 11**
**D-80506 München (DE)**

**Beschreibung**

Die Erfindung betrifft ein interferometrisches Gaskomponenten-Meßgerät nach den Oberbegriffen der Patentansprüche 1 und 2.

Ein derartiges Gaskomponenten-Meßgerät ist in der DE-OS 36 12 733 beschrieben. Dieses Meßgerät ist als polarisationsinterferometrischer Korrelator gemäß der DE-OS 26 04 471 als Mehrkomponenten-Meßsystem ausgeführt. Hierzu ist das Polarisationsinterferometer durch eine Filter-Multiplexvorrichtung ergänzt, die als Polychromator mit einem Dispersionsgitter und diskreten Detektoren hinter den Austrittsspalten, die den Wellenlängenfenstern zugeordnet sind, ausgebildet ist. Das Polarisations-Interferometer ist im einzelnen so aufgebaut, daß eine Planparallelplatte aus doppelbrechendem Material zwischen einem parallel orientierten Polarisator-Analysatorpaar angeordnet ist. Bei festliegender Doppelbrechung ($\Delta n = n_e - n_o$) des Materials wird deren geometrische Dicke d so gewählt, daß die Phasenverschiebung zwischen dem e- und dem o-Strahl gerade dem Reziproken der quasiperiodischen Linienaufspaltung der Vibrations- und/oder Rotationsbanden des betreffenden Gasmoleküls entspricht.

Nach der DE-OS 36 12 733 werden mit einer entsprechend gewählten Plattendicke gleichzeitig eine Doppellinie von NO bei 226 nm, ein Ausschnitt $SO_2$-Spektrums bei 310 nm und ein Ausschnitt des $NO_2$-Spektrums bei 430 nm gemessen, was deswegen möglich ist, weil die Plattendicke nicht sehr genau festgelegt sein muß und über weite Dickenbereiche von ± 10 % eine gute Überdeckung des Interferometerkamms mit dem Linienspektrum gewährleistet ist. Die spektralen Fenster werden dann mit dem oben erwähnten Polychromator gemultiplext.

Die Erfassung mehrer Gaskomponenten mit dem bekannten Meßgerät ist jedoch nur durch die zufällige nahezu identische Linienaufspaltung der drei gemessenen Gaskomponenten möglich. Die Methode ist also nicht für beliebige Gaskomponenten anwendbar. Im Anspruch 6 der DE-OS 36 12 733 wird auch noch die Möglichkeit eines Zeitmultiplexens der Plattendicke dadurch angegeben, daß mit zwei Doppelbrechungsplatten bei Parallelorientierung deren Summendicke und bei orthogonaler Orientierung deren Differenzdicke interferometrisch wirksam ist.

Zur Polarisationsmodulation wird in der bekannten Anordnung ein photoelastischer Modulator verwendet. Ein solcher photoeleastischer Modulator ist jedoch wegen möglicher polarisierter Spannungsdoppelbrechung nicht ganz unproblematisch bezüglich der Zeitkonstanz der Modulation.

Das Ziel der vorliegenden Erfindung besteht nun darin, ein interferometrisches Gaskomponenten-Meßgerät der eingangs genannten Gattung zu schaffen, mit dem zwei bzw. drei Gaskomponenten erfaßt werden können, ohne daß eine Einschränkung bezüglich der ausgewählten Gaskomponenten erforderlich ist und auch ohne daß ein photoelastischer Modulator verwendet werden muß. Es sollen z.B. die Gastripel $NH_3$, NO und $SO_2$, welche bei Kraftwerksbrennern vorkommen, oder HF, HCl und CO, welche bei der Müllverbrennung von Interesse sind, mit dem erfindungsgemäßen Gaskomponenten-Meßgerät erfaßt werden können.

Zur Lösung dieser Aufgabe sind die Merkmale der kennzeichnenden Teile der Ansprüche 1 oder 2 vorgesehen.

Der Erfindungsgedanke besteht also darin, daß zu der einen unter 45° zur Polarisationsrichtung angeordneten feststehenden doppelbrechenden Platte ein oder zwei weitere doppelbrechende Platten hinzugenommen werden, die jedoch mit einer vorbestimmten Frequenz von typisch 130 Hz um die optische Achse des optischen Systems rotieren. Auf diese Weise gibt es bei jedem Umlauf zumindest eine Drehstellung, bei der die durch beide oder drei Platten gebildete effektive Plattendicke entweder gerade der Dicke der feststehenden Platte oder der Summen- oder Differenzdicke der beiden Platten entspricht oder bei der die effektive Gesamtdicke verschiedenen Linerkombinationen der Dicke der feststehenden Platte und der umlaufenden Platten entspricht. Es handelt sich hier um reine Moden des Interferometers, zu denen feste Winkelbeziehungen gehören.

Indem die elektronische Auswerteschaltung die momentane Phase der umlaufenden Platte bzw. umlaufenden Platten erfaßt und bei geeigneten Momentan-Winkelstellungen eine Messung ausführt, können so zwei bzw. drei beliebige Gaskomponenten bezüglich ihrer Konzentration laufend erfaßt werden.

Vorteilhafte Weiterbildungen der Erfindung sind durch die Unteransprüche gekennzeichnet.

Die Erfindung wird im folgenden beispielsweise anhand der Zeichnung beschrieben; in dieser zeigt:

Fig. 1
schematisch den optischen Strahlengang sowie ein Blockschaltbild eines erfindungsgemäßen interferometrischen Gaskomponenten-Meßgerätes für die Messung von drei Gaskomponenten, die

Fig. 2a bis 2e
schematische Draufsichten der feststehenden und rotierenden Platten zur Veranschaulichung der Wirkungsweise der Ausführungsform für die Ausmessung von zwei Gaskomponenten und die

Fig. 3a bis 3 e
entsprechende Draufsichten und Phasendarstellungen einer weiteren Ausfuhrungsform zur Ausmessung von drei Gaskomponenten.

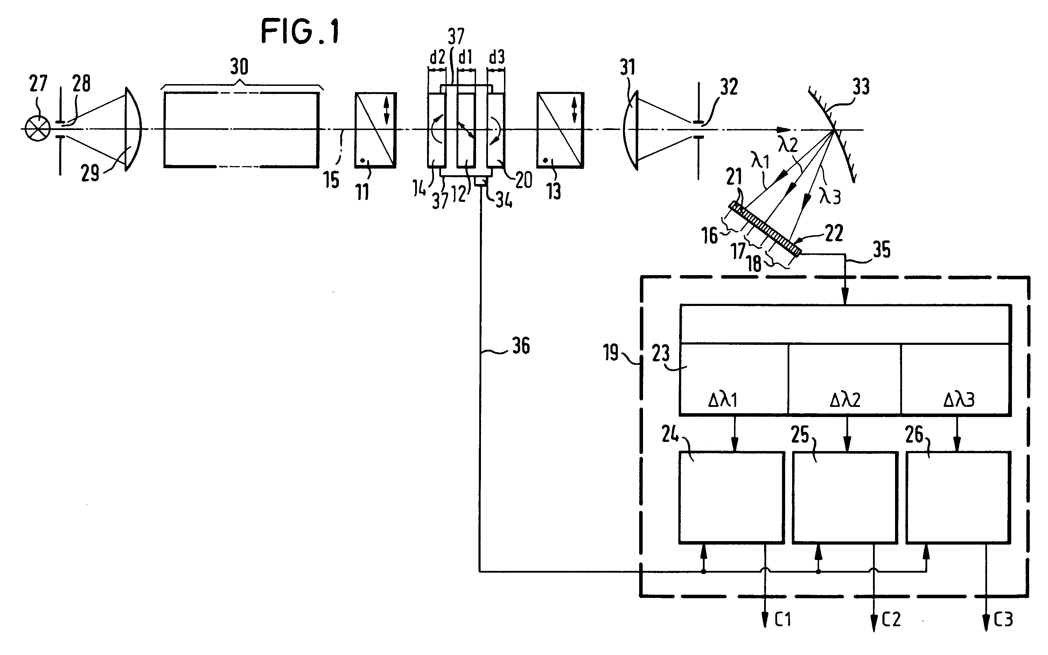

Nach Fig. 1 wird eine die erforderliche Bandbreite aufweisende Lichtquelle 27 durch einen schematisch dargestellten Kondensor 28 in ein Eingangsobjektiv 29 abgebildet, welches seinerseits die Kondensoröffnung ins Unendliche abbildet, so daß aus dem Eingangsobjektiv 29 ein paralleles Lichtbündel austritt, welches durch eine gasgefüllte Meßstrecke 30 hindurchtritt und anschließend auf einen Polarisator 11 trifft, der beispielsweise als Wollaston-Prisma ausgebildet sein kann.

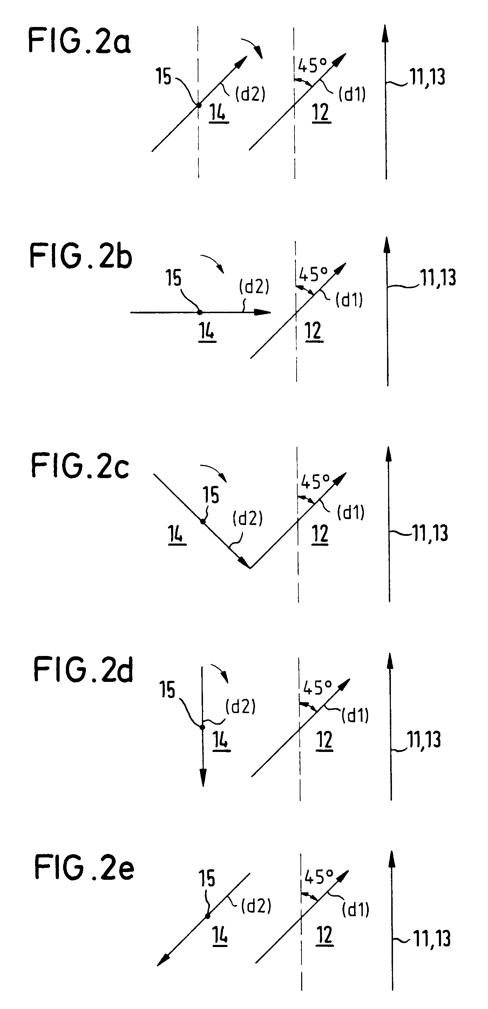

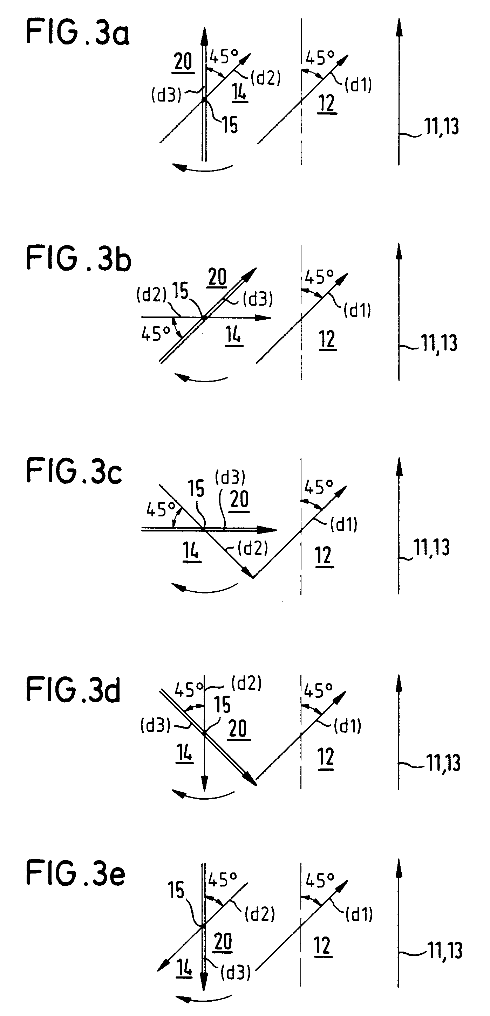

Hinter dem Polarisator 11 und einer weiter unten beschriebenen doppelbrechenden Platte 14 befindet sich ebenfalls auf der Achse 15 des optischen Systems und senkrecht zu diesem eine feststehende doppelbrechende planparallele Platte 12, deren optische Achse unter 45° zur Polarisationsrichtung des Polarisators 11 angeordnet ist. Die doppelbrechende Platte 12 hat eine Dicke dl, die in auf die zu messenden Gaskomponenten abgestimmter Weise gewählt ist, was weiter unten unter Bezugnahme auf die Fig. 2 und 3 im einzelnen beschrieben wird.

Vor und hinter der feststehenden doppelbrechenden Platte 12 befinden sich senkrecht auf der Achse 15 zwei weitere doppelbrechende planparallele Platten 14 bzw. 20 mit den Dicken d2 bzw. d3, die mit ihren optischen Achsen um 45° zueinander versetzt durch eine schematisch angedeutete Drehkupplung 37 drehfest miteinander gekuppelt sind und gemeinsam um die Achse 15 des optischen Systems rotieren. Im Anschluß an die Platte 20 ist ein Analysator 13 vorgesehen, dessen optische Achse parallel zu der des Polarisators 11 verläuft. Es folgt dann ein Ausgangsobjektiv 31, in dessen Brennpunkt sich eine Ausgangsspaltblende 32 befindet, in der der Spalt der Eingangsspaltblende 28 abgebildet ist.

Hinter der Ausgangsspaltblende 32 befindet sich als Beugungsgitter ein schräggestelltes holographisches Konkavgitter 33, welches auftreffende Lichtstrahlen je nach Wellenlänge unter etwas unterschiedlichen Winkeln zu einer Diodenzeile 22 reflektiert, die aus einzelnen in einer Reihe angeordneten Einzeldioden 21 besteht. Die Diodenzeile 22 kann z.B. aus 256 Einzeldioden 21 bestehen.

Die Diodenzeile 22 und ein an den gemeinsam rotierenden Platten 14, 20 vorgesehener, die momentane Winkelstellung der Platten 14, 20 abfragender Winkelstellungsgeber 34 sind über Leitungen 35 bzw. 36 an eine elektronische Auswerteschaltung 19 angeschlossen, die eine Diodenselektionsschaltung 23 und drei Lock-In-Verstärker 24, 25, 26 enthält. Die Winkelstellungs-Steuerleitung 36 ist an die Steuereingänge der Lock-In-Verstärker 24, 25, 26 angeschlossen.

Die Diodenselektionsschaltung 23 faßt jeweils eine Anzahl von Einzeldioden 21 zu entsprechend breitbandigen Photoempfängern 16, 17 bzw. 18 zusammen und bildet durch Integration der Diodensignale bei drei für drei verschiedene Gaskomponenten in der Meßstrecke 30 charakteristischen Wellenlängen λ1, λ2 bzw. λ3 charakteristische Intensitätssignale in den um die drei Wellenlängen 1, λ2 bzw. λ3 herumliegenden Bändern Δλ1, Δλ2 bzw. Δλ3. Die zu Photoempfängern 16, 17 bzw. 18 zusammengepaßten Einzeldioden 21 stellen also Bandpaßfilter um die Wellenlängen λ1, λ2 bzw. λ3 herum dar. Wenn einzelne Photoempfänger benutzt werden (z.B. im Infraroten), dann verwendet man am besten Interferenzfilter.

Je nach dem, wieviel Einzeldioden 21 zu den Photoempfängern 16, 17, 18 zusammengefaßt werden, kann um die drei ausgewählten Wellenlängen λ1, λ2 und λ3 herum eine entsprechende Bandbreite verwirklicht werden.

Die Lock-In-Verstärker 24, 25, 26 empfangen die Intensitätssignale aus den Wellenlängenbändern Δλ1, Δλ2 und Δλ3 als Eingangssignal und geben Konzentrationssignale C1, C2 bzw. C3 nur bei in ganz bestimmter Weise vorherbestimmten Winkelstellungen des Plattenpakets 14, 20 ab, was im folgenden anhand der Fig. 2 und 3 im einzelnen beschrieben wird.

Die Fig. 2a bis 2e zeigen den Fall, daß lediglich eine feststehende Platte 12 und eine umlaufende Platte 14 , die auch hinter der feststehenden Platte 12 angeordnet sein könnte, vorgesehen sind. In den Fig. 2 und 3 ist die optische Achse des Polarisators 11 und des Analysators 13 durch den Pfeil 11, 13 symbolisiert. Die optischen Achsen der doppelbrechenden Platten 12, 14 sind jeweils durch einen Pfeil symbolisiert, an dem zur Kennzeichnung die Kurzbezeichnung (d1) bzw. (d2) für die Dicke der betreffenden Platte 12 oder 14 angebracht ist.

Nach Fig. 2a ist die optische Achse (d1) der feststehenden Platte 12 unter einem Winkel von 45° zur optischen Achse des Polarisators 11 bzw. des Analysators 13 angeordnet.

Wenn nun im Verlaufe der Drehbewegung der rotierenden Platte 14, deren optische Achse (d2) ebenfalls unter einem Winkel von 45° zur Polarisationsrichtung angeordnet ist, so addieren sich in diesem Fall die Dicken d1 und d2 zu einer Summendicke d1 + d2, so daß in diesem Augenblick eine einzige Platte mit der entsprechenden Summendicke vorzuliegen scheint. Auf der Diodenzeile erscheint bei dem Wellenlängenband Δλ1 ein entsprechendes Intensitätssignal. Wird nun durch den Winkelstellungsgeber 34 der Lock-In-Verstärker 24 in diesem Augenblick aktiviert, so erscheint an dessen Ausgang ein Konzentrationssignal C1, welches für eine entsprechende Gaskomponente repräsentativ ist. Die Gesamtplattendicke d1 + d2 ist dabei so zu wählen, daß die Phasenverschiebung zwischen dem e- und dem o-Strahl (das sind die senkrecht zueinander polarisierten Strahlen innerhalb der doppelbrechenden Platten) gerade dem Reziproken der quasiperiodischen Linienaufspaltung der Vibrations- oder Rotationsbanden des Gasmoleküls einer auszumessenden Gaskomponente entspricht.

In der Position nach Fig. 2b hat sich die Platte 14 gegenüber Fig. 2a um einen Winkel von 45° weitergedreht, so daß nunmehr die optische Achse (d2) der Platte 14 senkrecht zur Polarisationsrichtung steht. In diesem Fall erzeugt die umlaufende Platte 14 keinen Gangunterschied, und die Phasenverschiebung der beiden senkrecht aufeinander polarisierten Strahlen wird allein durch die feststehende Platte 12 bestimmt. Die effektive Plattendicke entspricht also in diesem Augenblick der Dicke d1 der feststehenden Platte 12. Auf der Diodenzeile 22 erscheint im Bereich des Photoempfängers 17 nunmehr ein Wellenlängensignal aus dem Wellenlängenband Δλ2, welches einer weiteren Gaskomponente zugeordnet sein kann, indem die Dicke d1 so gewählt ist, daß die Phasenverschiebung zwischen e- und o-Strahl gerade dem Reziproken der quasiperiodischen Linienaufspaltung der Vibrations- und/oder Rotationsbanden des Gasmoleküls einer weiteren Gaskomponente entspricht.

In der Position nach Fig. 2c hat sich die rotierende Platte 14 gegenüber Fig. 2b um weitere 45° weitergedreht, so daß nunmehr die optischen Achsen (d1 bzw. d2) der beiden Platten 12, 14 senkrecht aufeinander stehen. Dies entspricht einer effektiven Gesamtplattendicke |d2 - d1|, so daß auch eine dieser Absolutdifferenz entsprechende Gaskomponente vorgesehen und meßtechnisch erfaßt werden könnte, indem einer der weiteren Lock-In-Verstärker 25 oder 26 entsprechend aktiviert wird. Auch im Falle der Fig. 2b wird einer der weiteren Lock-In-Verstärker 25, 26 aktiviert, wenn gerade die effektive Plattendicke d1 vorhanden ist.

In der Darstellung der Fig. 2d hat sich die rotierende Platte 14 um weitere 45° verdreht, so daß nunmehr die optische Achse der rotierenden Platte 14 parallel zur Polarisationsrichtung verlauft. In diesem Fall ist die effektive Plattendicke wieder d1.

Bei einer weiteren Drehung um 45° gemäß Fig. 2e verlaufen die optischen Achsen (d1) und (d2) wieder parallel, so daß ebenso wie bei der Winkelstellung nach Fig. 2a wieder die effektive Plattendicke d1 + d2 vorhanden ist, was durch geeignete Ansteuerung des Lock-In-Verstärkers 24 zur Bildung eines Konzentrationssignals C1 erfaßt werden kann.

In den Fig. 3a bis 3e bezeichnen gleiche Bezugszahlen entsprechende Teile wie in den Fig. 2a bis 2e. In den Fig. 3a bis 3e ist der in Fig. 1 wiedergegebene Fall funktionell dargestellt, bei dem vor bzw. hinter der festehenden Platte 12 doppelbrechende Platten 14, 20 mit einem Winkel von 45° ihrer optischen Achsen (d2) und (d3) drehfest zueinander angeordnet sind, um gemeinsam in Richtung des Drehpfeiles um die Achse 15 des optischen Systems zu rotieren.

In der Drehposition der Platten 14, 20 nach Fig. 3a ist die optische Achse (d2) parallel zur optischen Achse (d1) der festen Platte 12, während die optische Achse (d3) der mit der Platte 14 umlaufenden festen doppelbrechenden Platte (20) parallel zur Polarisationsrichtung des Polarisators 11 bzw. des Analysators 13 verläuft.

In der Drehstellung nach Fig. 3a liegt also eine effektive Plattendicke entsprechend der Summe d1 + d2 vor. Diese effektive Gesamtdicke könnte einer ersten Gaskomponente im Sinne der obigen Ausführungen zugeordnet werden.

Nach Fig. 3b haben sich die Platten 14, 20 um einen Winkel 45 weitergedreht, so daß nunmehr die optische Achse (d2) der umlaufenden Platte 14 senkrecht zur Polarisationsrichtung verläuft und somit neutralisiert ist, während die optische Achse (d3) der umlaufenden Platte 20 parallel zur optischen Achse (d1) der feststehenden Platte verläuft. Dies entspricht einer effektiven Gesamtdicke d1 + d3. Dieser effektiven Gesamtdicke könnte eine weitere Gaskomponente zugeordnet werden, indem diese Summe so gewählt wird, daß die Phasenverschiebung zwischen e- und o-Strahl gerade dem Reziproken der quasiperiodischen Linienaufspaltung der Vibrations- und/oder Rotationsbanden der Gasmolekule einer weiteren Gaskomponente entspricht.

Fig. 3c zeigt eine weitere Momentaufnahme der Drehposition der Platten 14, 20, und zwar gegenüber Fig. 3b um einen weiteren Winkel von 45° weitergedreht. Jetzt ist die umlaufende Platte 20 insofern neutralisiert, als ihre optische Achse (d3) senkrecht auf der Polarisationsrichtung steht. Da jedoch gleichzeitig die optischen Achsen (d2) und (d1) senkrecht aufeinanderstehen, entspricht dies einer effektiven Gesamtplattendicke von |d2 - d1|. Dieser effektive Plattenwert kann im Sinne der vorstehenden Ausführungen einer bestimmten Gaskomponente zugeordnet werden.

Bei einer weiteren 45°-Drehung gemäß Fig. 3d verlauft die optische Achse (d2) parallel zur Polarisationsrichtung, während die optischen Achsen (d3) und (d1) senkrecht aufeinanderstehen. Dies ergibt eine effektive Plattendicke von |d3 - d1|. Auch hier kann eine geeignete Zuordnung zu einer bestimmten Gaskomponente gefunden werden.

Schließlich verlaufen nach einer weiteren 45°-Drehung der Platten 14, 20 gemäß Fig. 3e die optischen Achsen (d2) und (d1) ähnlich wie bei Fig. 3a wieder zueinander parallel, während (d3) parallel zur Polarisationsrichtung ist. Nunmehr ist wieder der effektive Plattendickenzustand nach Fig. 3a erreicht, d.h. die effektive Plattendicke beträgt bei der Drehposition der Fig. 3e d2 + d1.

Für die in den Fig. 2a bis 2e bzw. 3a bis 3e nicht beschriebenen zweiten Halbkreise der Drehung der umlaufenden Platten 14, 20 wiederholen sich die im einzelnen beschriebenen Kombinationen.

Die Plattendicken d1, d2 und ggfs. d3 können stets so gewählt werden, daß drei geeignete Linearkombinationen der Dicken d2, d3 der umlaufenden Platten 14, 20 mit der Dicke d1 der feststehenden Platte stets zu zwei bzw. drei gewünschten Gaskomponenten passen. Die vierte Kombination ist dann nicht mehr frei wählbar und wird daher im allgemeinen nicht benutzt.

Die Vorteile der erfindungsgemäßen Anordnung bestehen darin, daß eine zusätzliche Polarisationsmodulation entbehrlich ist und im Ausgangssignal des Detektors, insbesondere der Diodenzeile die zu den Gaskomponenten gehörenden Signale mit unterschiedlicher Frequenz und Phasenlage codiert vorhanden sind. Eine weitere Trennung erfolgt durch unterschiedliche Spektralfenster, die den Absorptionsbanden der einzelnen Moleküle eindeutig zugeordnet sind.

Die Verwendung von dielektrischen Interferenzfiltern als Bandpaßfilter unterhalb 350 nm ist nicht unproblematisch. Bei geforderten Halbwertsbreiten von ca. 3 % der Zentralwellenlänge ist die Transmission nicht besser als 15 %. Die Reproduzierbarkeit von Zentralwellenlänge und Halbwertsbreite ist von den Herstellern im allgemeinen nicht zu garantieren. Von Vorteil ist deswegen ein Polychromator mit holographischem Konkavgitter 33 mit Flat-Field in der Bildebene, wie es in Fig. 1 dargestellt ist. Als Detektor wird hier die Diodenzeile 22 in CCD-ECD-Technik gestellt. Die Befilterung geschieht durch Integration der Signale über ausgewählte, den Spektralfenstern zugeordnete Diodenbereiche 16, 17 bzw. 18. Das ergibt Bandpaßfilter mit nahezu rechteckiger spektraler Transmissionskurve bei Polychromaten-Transmissionswerten von typisch 30 bis 40 %. Die integrierten Diodensignale werden den getrennten Lock-In-Verstärkern 24 bis 26 zugeführt, die auf die doppelte Rotationsfrequenz der umlaufenden Platte 14 bzw. des umlaufenden Plattenpaares 14, 20 gelockt sind bei unterschiedlicher Phasenlage. Die Ausgangssignale der Lock-In-Verstärker 24, 25 und 26 sind proportional den gesuchten Gaskonzentrationen C1, C2 bzw. C3.

**Patentansprüche**

**1.** Interferometrisches Gaskomponenten-Meßgerät, insbesondere für kleine Gasmoleküle, mit einer Lichtquelle (27) einer Bandbreite, die im Verwendungsfall die auszunutzenden Absorptionsspektren der festzustellenden Gase enthält, einem die Lichtquelle (27) in ein Eingangsobjektiv (29) abbildenden Kondensor, einer Meßstrecke (30), in welche die Gaskomponenten eingebracht werden können, die von dem durch das Eingangsobjektiv (29) tretenden Licht der Lichtquelle (27) beaufschlagt ist, wobei aus der Meßstrecke (20) austretendes Licht auf einen Polarisator (11) gerichtet ist, hinter dem eine feststehende doppelbrechende Platte (12) angeordnet ist, deren optische Achse einen Winkel von vorzugsweise 45° mit der Polarisationsrichtung des Polarisators (11) einschließt und eine solche Dicke (d1) aufweist, daß im Verwendungsfall die optische Wegdifferenz zwischen den senkrecht zueinander polarisierten Strahlen in der Platte (12) gerade dem Reziproken der quasiperiodischen Linienaufspaltung einer ausgewählten Vibrations- und/oder Rotationsbande der Gasmoleküle einer Gaskomponente entspricht, mit einem hinter der Platte (12) angeordneten Analysator (13), dessen optische Achse parallel zu der des Polarisators (11) verläuft, einem dahinter angeordneten Ausgangsobjektiv (31), in dessen Brennpunkt eine Ausgangsblende (32) angeordnet ist, sowie mit einem hinter der Ausgangsblende (32) befindlichen Beugungsgitter (33), welches zur Lenkung des Lichtes der ausgewählten Vibrations- und/oder Rotationsbande zu einem Photoempfänger (22) geeignet ist, der zur Abgabe eines für die Konzentration der betreffenden Gaskomponente an der Meßstrecke repräsentativen elektrischen Konzentrationssignals ausgebildet ist, dadurch **gekennzeichnet,** daß zwischen der feststehenden Platte (12) und dem Polarisator (11) oder dem Analysator (13) wenigstens eine weitere doppelbrechende Platte (14) angeordnet ist, welche um die Achse (15) des optischen Systems rotierbar ausgebildet ist und eine solche Dicke (d2) aufweist, daß im Verwendungsfall die Summe (d1 + d2) oder Differenz (|d2 - d1|) der Dicken (d1, d2) der beiden Platten (12, 14) gerade eine optische Wegdifferenz zwischen den senkrecht zueinander polarisierten Strahlen in den Platten (12, 14) hervorruft, die dem Reziproken der quasiperiodischen Linienaufspaltung einer ausgewählten Vibrations- und/oder Rotationsbande der Gasmolekühle einer weiteren Gaskomponente entspricht, und daß für jede der beiden Wellenlängenbänder, die den beiden ausgewählten Vibrations- und/oder Rotationsbanden entsprechen, ein eigener Photoempfänger (16,17) vorgesehen ist, wobei die Ausgangssignale der beiden Photoempfänger (16,17) und ein Winkelstellungssignal der rotierbaren Platte (14) an eine elektrische Auswerteschaltung (19) angelegt sind, die bei Momentan-Winkelstellungen der rotierbaren Platte (14) von 45° und Vielfachen von 45° relativ zur Polarisationsrichtung das der Dicke (d1) der feststehenden Platte (12) und das der Summe (d1 + d2) oder Differenz (|d2 - d1|) der Plattendicken entsprechende Konzentrationssignal (C1, C2) bildet.

2. Interferometrisches Gaskomponenten-Meßgerät, insbesondere für kleine Gasmoleküle, mit einer Lichtquelle (27) einer Bandbreite, die im Verwendungsfall die auszunutzenden Absorptionsspektren der festzustellenden Gase enthält, einem die Lichtquelle (27) in ein Eingangsobjektiv (29) abbildenden Kondensor, einer Meßstrecke (30), in welche die Gaskomponenten eingebracht werden können, die von dem durch das Eingangsobjektiv (29) tretenden Licht der Lichtquelle (27) beaufschlagt ist, wobei aus der Meßstrecke (20) austretendes Licht auf einen Polarisator (11) gerichtet ist, hinter dem eine feststehende doppelbrechende Platte (12) angeordnet ist, deren optische Achse einen Winkel von vorzugsweise 45° mit der Polarisationsrichtung des Polarisators (11) einschließt und eine solche Dicke (d1) aufweist, daß im Verwendungsfall die optische Wegdifferenz zwischen den senkrecht zueinander polarisierten Strahlen in der Platte (12) gerade dem Reziproken der quasiperiodischen Linienaufspaltung einer ausgewählten Vibrations- und/oder Rotationsbande der Gasmoleküle einer Gaskomponente entspricht, mit einem hinter der Platte (12) angeordneten Analysator (13), dessen optische Achse Parallel zu der des Polarisators (11) verläuft, einem dahinter angeordneten Ausgangsobjektiv (31), in dessen Brennpunkt eine Ausgangsblende (32) angeordnet ist, sowie mit einem hinter der Ausgangsblende (32) befindlichen Beugungsgitter (33), welches zur Lenkung des Lichtes der ausgewählten Vibrations- und/oder Rotationsbande zu einem Photoempfänger (22) geeignet ist, der zur Abgabe eines für die Konzentration der betreffenden Gaskomponente an der Meßstrecke repräsentativen elektrischen Konzentrationssignals ausgebildet ist, dadurch gekennzeichnet, daß zwischen der feststehenden Platte (12) und dem Polarisator (11) einerseits sowie dem Analysator (13) andererseits jeweils eine weitere doppelbrechende Platte (14, 20) angeordnet ist, wobei die optischen Achsen dieser vor und hinter der feststehenden Platte (12) angeordneten, weiteren doppelbrechenden Platten (14, 20) unter einem Winkel von 45° zueinander angeordnet sind und gemeinsam um die Achse (14) des optischen Systems rotierbar ausgebildet sind und jeweils solche Dicken (d2, d3) aufweisen, daß im Verwendungsfall Summen (d1 + d1; d1 + d3) oder Differenzen (|d2 - d1|; |d3 - d1|) der Dicken (d1; d2, d3) der feststehenden und der rotierenden Platten (12; 14, 20) gerade eine optische Wegdifferenz zwischen den senkrecht aufeinander polarisierten Strahlen in den Platten (12, 14, 20) hervorruft, die dem Reziproken der quasiperiodischen Linienaufspaltung der ausgewählten Vibrations- und/oder Rotationsbanden der Gasmoleküle von drei Gaskomponenten entspricht, und daß für jedes der drei Wellenlängenbänder, die den drei ausgewählten Vibrations- und/oder Rotationsbanden entsprechen, ein eigener Photoempfänger (16, 17, 18) vorgesehen ist, wobei die Ausgangssignale der drei Photoempfänger (16, 17, 18) und ein Winkelstellungssignal der rotierbaren Platten (14, 20) an eine elektrische Auswerteschaltung (19) angelegt sind, die bei Momentanwinkelstellungen der rotierbaren Platten (14, 20) von 45° und Vielfachen von 45° relativ zur Polarisationsrichtung drei Konzentrationssignale (C1, C2, C3) bildet, die drei aus den Summen (d1 + d2; d1 + d3) und Differenzen (|d2 - d1|, |d3 - d1|) ausgewählten Linearkombinationen der Dicken (d1, d2, d3) entsprechen.

3. Gaskomponenten-Meßgerät nach Anspruch 1 oder 2, dadurch **gekennzeichnet,** daß die Photoempfänger (16, 17, 18) durch eine Anzahl von Einzeldioden (21) einer Diodenzeile (22) gebildet sind, welche jeweils einem Wellenlängenband ($\Delta\lambda_1$, $\Delta\lambda_2$, $\Delta\lambda_3$) zugeordnet sind.

4. Gaskomponenten-Meßgerät nach Anspruch 3, dadurch **gekennzeichnet,** daß an die Diodenzeile (22) eine Diodenselektionsschaltung (23) angeschlossen ist und jedes der durch diese gebildeten zwei bzw. drei integrierten Diodensignale ($\Delta\lambda1$, $\Delta\lambda2$, $\Delta\lambda3$) eigenen Lock-In-Verstärkern (24, 25, 26) zugeführt ist, die bei unterschiedlicher Phasenlage auf die doppelte Rotationsfrequenz der umlaufenden Platte (14) bzw. des umlaufenden Plattenpaares (14, 20) gelockt sind.

**Claims**

1. Interferometric gas component measuring apparatus, in particular for small gas molecules, comprising a light source (27) of a bandwidth which, in use, contains the absorption spectra to be used of the gases which are to be determined; a condensor for forming an image of the light source (27) in an input objective (29); a measurement path (30) into which the gas components can be brought and which is illuminated by the light of the light source (27) entering through the input objective (29), wherein light emerging from the measurement path (20) is directed onto a polariser (11) which has a stationary birefringent plate (12) arranged behind it, with the optical axis of the birefringent plate (12) forming an angle of preferably 45° with the direction of polarization of the polarizer (11) and having a thickness (d1) such that, in use, the optical path difference between the mutually perpendicularly polarized beams in the plate (12) just corresponds to the reciprocal of the quasi-periodic line splitting of a selected vibrational and/or rotational band of the gas molecules of a gas component; an analyser (13) arranged behind the plate (12), the optical axis of which extends parallel to that of the polariser (11); an output objective (31) arranged behind the analyser (13) with an output diaphragm (32) arranged at its focal point; and a diffraction grating (33) which is located behind the output diaphragm (32) and which is suitable for deflecting light of the selected vibrational and/or rotational band to a photoreceiver (22) which is constructed for transmitting an electrical concentration signal representative of the concentration of the relevant gas component in the measurement path,

**characterised in that** at least one further birefringent plate (14) which is arranged between the fixed plate (12) and the polariser (11) or the analyser (13), which is constructed so as to be rotatable about the axis (15) of the optical system and which has a thickness (d2) such that, in use, the sum (d1 + d2) or difference (|d2 - d1|) of the thicknesses (d1, d2) of the two plates (12, 14) produces an optical path difference between the mutually perpendicularly polarised beams in the plates (12, 14) which just corresponds to the reciprocal of the quasi-periodic line splitting of a selected vibrational and/or rotational band of the gas molecules of a further gas component; and in that, for each of the two wavelength bands corresponding to the two selected vibrational and/or rotational bands, a respective photoreceiver (16, 17) is provided with the output signals of the two photoreceivers (16, 17) and an angular position signal of the rotatable plate (14) being applied to an electrical evaluation circuit (19) which, at instantaneous angular positions of the rotatable plate (14) of 45° and multiples of 45° relative to the direction of polarisation, forms the concentration signal (C1, C2) corresponding to the thickness (d1) of the stationary plate (12) and to the sum (d1 + d2) or difference (|d2 - d1|) of the plate thicknesses.

2. Interferometric gas component measuring apparatus, in particular for small gas molecules, comprising a light source (27) of a bandwidth which, in use, contains the absorption spectra to be used of the gases which are to be determined; a condensor for forming an image of the light source (27) in an input objective (29); a measurement path (30) into which the gas components can be brought and which is illuminated by the light of the light source (27) entering through the input objective (29), wherein light emerging from the measurement path (20) is directed onto a polariser (11) which has a stationary birefringent plate (12) arranged behind it, with the optical axis of the birefringent plate (12) forming an angle of preferably 45° with the direction of polarisation of the polariser (11) and having a thickness (d1) such that, in use, the optical path difference between the mutually perpendicularly polarised beams in the plate (12) just corresponds to the reciprocal of the quasi-periodic line splitting of a selected vibrational and/or rotational band of the gas molecules of a gas component; an analyser (13) arranged behind the plate (12), the optical axis of which extends parallel to that of the polariser (11); an output objective (31) arranged behind the analyser (13) with an output diaphragm (32) arranged at its focal point; and a diffraction grating (33) which is located behind the output diaphragm (32) and which is suitable for deflecting light of the selected vibrational and/or rotational band to a photoreceiver (22) which is constructed for transmitting an electrical concentration signal representative of the concentration of the relevant gas component in the measurement path,

**characterised in that** respective further birefringent plates (14, 20) are arranged between the fixed plate (12) and, on the one hand, the polariser (11) and, on the other hand, the analyser (13), with the optical axes of these further birefringent plates (14, 20) arranged in front of and behind the fixed plate (12) being arranged at an angle of 45° to one another and constructed so as to be jointly rotatable about the axis (15) of the optical system and respectively having thicknesses (d2, d3) such that, in use, sums (d1 + d1; d1 + d3) or differences (|d2 - d1|; |d3 - d1|) of the thicknesses (d1; d2, d3) of the fixed and of the rotating plates (12; 14, 20) respectively produce an optical path difference between the mutually perpendicularly polarised beams in the plates (12, 14, 20) which corresponds to just the reciprocal of the quasi-periodic line splitting of the selected vibrational and/or rotational bands of the gas molecules of three gas components; and in that, for each of the three wavelength bands corresponding to the three selected vibrational and/or rotational bands, a respective photoreceiver (16, 17, 18) is provided, with the output signals of the three photoreceivers (16, 17, 18) and an angular position signal of the rotating plates (14, 20) being applied to an electrical evaluation circuit (19) which, at instantaneous angular positions of the rotatable plates (14, 20) of 45° and multiples of 45° relative to the direction of polarisation, forms three concentration signals (C1, C2, C3) corresponding to three linear combinations of the thicknesses (d1, d2, d3) selected from the sums (d1 + d2; d1 + d3) and differences (|d2 - d1|, |d3 - d1|).

3. Gas component measurement apparatus in accordance with claim 1 or 2, characterised in that one diode row (22) made up of a number of individual diodes (21) forms the photoreceivers (16, 17, 18) which are respectively associated with one wavelength band (Δλ1, Δλ2 and Δλ3).

4. Gas component measurement apparatus in accordance with claim 3, characterised in that a diode selection circuit (23) is connected to the diode row (22) and each of the two or three integrated diode signals (Δλ1, Δλ2, Δλ3) formed by this diode selection circuit (23) is supplied to its own lock-in amplifier (24, 25, 26), with the lock-in amplifiers being locked at different phase positions to twice the rotational frequency of the rotating plate (14) or of the rotating plate pair (14, 20) respectively.

**Revendications**

1. Appareil pour la mesure d'un composant gazeux par interférométrie, en particulier pour des molécules gazeuses de petites tailles, comprenant une source lumineuse (27) laquelle présente une largeur de bande qui contient le spectre d'absorption à utiliser dans le cas d'application pour les gaz qui doivent être déterminés; un condenseur qui forme une image de la source lumineuse (27) dans un objectif d'entrée (29); un trajet de mesure (30) dans lequel les composants gazeux peuvent être amenés et qui est illuminé par la lumière de la source lumineuse (27) qui traverse l'objectif d'entrée (29); la lumière sortant du trajet de mesure (20) étant dirigée sur un polariseur (11) derrière lequel est agencée une plaque stationnaire à double réfraction (12), dont l'axe optique forme un angle de 45° de préférence avec la direction de polarisation du polariseur (11) et a une épaisseur (d1) telle que dans le cas d'application la différence de trajet optique entre les rayons polarisés perpendiculairement l'un à l'autre dans la plaque (12) correspond directement à la réciproque de coupure de lignes quasi-périodique d'une bande de vibration et/ou de rotation choisie des molécules gazeuses d'un composant gazeux; un analyseur (13) agencé derrière la plaque (12), dont l'axe optique s'étend parallèlement à celui du polariseur (11); un objectif de sortie (31) agencé derrière celui-ci, au foyer duquel est agencé un diaphragme de sortie (32); ainsi qu'un réseau de diffraction (33) situé derrière le diaphragme de sortie (32), ledit réseau de diffraction étant propre à défléchir la lumière de la bande de vibration ou de rotation choisie en direction d'un photo-récepteur (22) qui est réalisé pour délivrer un signal électrique de concentration représentatif de la concentration du composant gazeux considéré au niveau du trajet de mesure, caractérisé en ce qu'entre la plaque fixe (12) et le polariseur (11) ou l'analyseur (13) est agencée au moins une autre plaque (14) à double réfraction, laquelle est réalisée de manière à pouvoir tourner autour de l'axe (15) du système optique, et présente une telle épaisseur (d2) que dans le cas d'application, la somme

(d1 + d2) ou la différence (|d2-d1|) des épaisseurs (d1, d2) des deux plaques (12, 14) entraîne directement une différence de trajet optique entre les rayons polarisés perpendiculaires l'un à l'autre dans les plaques (12, 14) qui correspond à la réciproque de la coupure de lignes quasi-périodique d'une bande de vibration et/ou de rotation choisie des molécules gazeuses d'un autre composant gazeux, et en ce que pour chacune des deux bandes de longueurs d'ondes qui correspondent aux deux bandes de vibration et/ou de rotation choisies, il est prévu un photo-récepteur propre (16, 17), les signaux de sortie des deux photo-récepteurs (16, 17) et un signal de position angulaire de la plaque rotative (14) étant appliqués à un circuit électrique d'évaluation (19) qui pour des positions angulaires instantanées de la plaque rotative (14) égales à 45° et à des multiples de 45° par rapport à la direction de polarisation, forme le signal correspondant à l'épaisseur (d1) de la plaque fixe (12) et le signal de concentration (C1, C2) qui correspond à la somme (d1 + d2) ou la différence (|d2 - d1|) de l'épaisseur des plaques.

2. Appareil pour la mesure d'un composant gazeux par interférométrie, en particulier pour des molécules gazeuses de petites tailles, comprenant une source lumineuse (27) laquelle présente une largeur de bande qui contient le spectre d'absorption à utiliser dans le cas d'application pour les gaz qui doivent être déterminés; un condenseur qui forme qui forme une image de la source lumineuse (27) dans un objectif d'entrée (29); un trajet de mesure (30) dans lequel les composants gazeux peuvent être amenés et qui est illuminé par la lumière de la source lumineuse (27) qui traverse l'objectif d'entrée (29); la lumière sortant du trajet de mesure (20) étant dirigée sur un polariseur (11) derrière lequel est agencée une plaque stationnaire à double réfractions (12), dont l'axe optique forme un angle de 45° de préférence avec la direction de polarisation du polariseur (11) et a une épaisseur (d1) telle que dans le cas d'application la différence de trajet optique entre les rayons polarisés perpendiculairement l'un à l'autre dans la plaque (12) correspond directement à la réciproque de coupure des lignes quasi-périodique d'une bande de vibration et/ou de rotation choisie des molécules gazeuses d'un composant gazeux; un analyseur (13) agencé derrière la plaque (12), dont l'axe optique s'étend parallèlement au polariseur (11); un objectif de sortie (31) agencé derrière celui-ci, au foyer duquel est agencé un diaphragme de sortie (32); ainsi qu'un réseau de diffraction (33) situé derrière le diaphragme de sortie (32), ledit réseau de diffraction étant propre à défléchir la lumière de la bande de vibration ou de rotation choisie en direction d'un photo-récepteur (22) qui est réalisé pour délivrer un signal électrique de concentration représentatif de la concentration du composant gazeux considéré au niveau du trajet de mesure, caractérisé en ce qu'entre la plaque fixe (12) et le polariseur (11) d'une part et l'analyseur (13) d'autre part est prévue à chaque fois une autre plaque (14, 20) à double réfraction, les axes optiques de ces plaques (14, 20) à double réfraction agencées en avant et en arrière de la plaque fixe (12) étant disposés sous un angle de 45° l'un par rapport à l'autre et réalisés de manière à pouvoir tourner en commun autour de l'axe (14) du système optique, et présentent chacune de telles épaisseurs (d2, d3) que dans le cas d'application, les sommes (d1 + d2; d1 + d3) ou les différences ($|d2-d1|$; $|d3-d1|$) des épaisseurs (d1, d2, d3) de la plaque fixe et des plaques tournantes (12; 14, 20) entraînent directement une différence de trajet optique entre les rayons polarisés perpendiculairement l'un à l'autre dans les plaques (12, 14, 20) qui correspond à la réciproque de la coupure de lignes quasi-périodique des bandes de vibration et/ou de rotation choisies des molécules gazeuses de trois composants gazeux, et en ce que pour chacune des trois bandes de longueurs d'ondes qui correspondent aux trois bandes de vibration et/ou de rotation choisies, il est prévu un photo-récepteur propre (16, 17, 18), les signaux de sortie des trois photo-récepteurs (16, 17, 18) et un signal de position angulaire des plaques rotatives (14, 20) étant appliqués à un circuit d'évaluation électrique (19), lequel forme pour des positions angulaires instantanées des plaques rotatives (14, 20) égales à 45° et à des multiples de 45° par rapport à la direction de polarisation, trois signaux de concentration (C1, C2, C3) qui correspondent à trois combinaisons linéaires des épaisseurs (d1, d2 d3) choisies parmi les sommes (d1 + d2; d1 + d3) et les différences ($|d2 - d1|$; $|d3 - d1|$).

3. Appareil de mesure de composants gazeux selon l'une ou l'autre des revendications 1 et 2, caractérisé en ce que les photo-récepteurs (16, 17, 18) sont formés par un certain nombre de diodes individuelles (21) d'une rangée de diodes (22), auxquelles sont associées respectivement une bande de longueur d'ondes ($\Delta\lambda_1$, $\Delta\lambda_2$, $\Delta\lambda_3$).

4. Appareil de mesure de composants gazeux selon la revendication 3, caractérisé en ce qu'un circuit de sélection de diodes (23) est raccordé à la rangée de diodes (22), et chacun des deux ou trois signaux de diodes intégrés ($\Delta\lambda_1$, $\Delta\lambda_2$, $\Delta\lambda_3$) formés par ce circuit sont alimentés à des amplificateurs de blocage propres (24, 25, 26) qui, pour des situations de phase différentes, sont bloqués sur le double de la fréquence de rotation de la plaque rotative (14) ou de la paire de plaques rotatives (14, 20).

FIG.1

EP 0 354 298 B1

FIG.2a

15

14  (d2)

45°

12  (d1)

11,13

FIG.2b

15

(d2)

14

45°

12  (d1)

11,13

FIG.2c

15

14  (d2)

45°

12  (d1)

11,13

FIG.2d

15

(d2)

14

45°

12  (d1)

11,13

FIG.2e

15

(d2)

14

45°

12  (d1)

11,13

FIG.3a

20    45°    (d2)
(d3)    14
15
12    45°    (d1)

11,13

FIG.3b

(d2)  15    20    (d3)
45°    14
12    45°    (d1)

11,13

FIG.3c

15    (d3)
45°    20
14    (d2)
12    45°    (d1)

11,13

FIG.3d

45°    (d2)
(d3)    15
14    20
12    45°    (d1)

11,13

FIG.3e

15    45°
(d2)
20
14    (d3)
12    45°    (d1)

11,13